# EUROPEAN PATENT SPECIFICATION

(11) **EP 1 127 403 B1**
(45) Date of publication and mention of the grant of the patent: **02.10.2002**
(21) Application number: 98956646.8
(22) Date of filing: 06.11.1998
(51) Int. Cl.: H02N 1/00, F15C 5/00

(54) **BUCKLED ACTUATOR WITH ENHANCED RESTORING FORCE**
VERFORMBARES ANTRIEBSELEMENT MIT ERHÖHTER RÜCKSTELLKRAFT
DISPOSITIF DE COMMANDE DEFORME DOTE D'UNE FORCE DE RAPPEL AMELIOREE

(43) Date of publication of application: 29.08.2001
(73) Proprietor: HONEYWELL INC., Minneapolis Minnesota 55408 (US)
(72) Inventor: CABUZ, Cleopatra, Edina, MN 55439 (US); OHNSTEIN, Thomas, R., Roseville, MN 55113 (US); HERB, William, R., Minneapolis, MN 55408 (US)
(74) Representative: Haley, Stephen
(86) International application number: US9823659
(87) International publication number: WO00028650

(56) References cited:
- EP-A- 0 592 469
- WO-A-97/29538
- DE-A- 19 637 928

## Description

### FIELD OF THE INVENTION

The present invention relates to an electrostatic actuator. More particularly the invention relates to an improved actuator having an enhanced restoring force.

### BACKGROUND OF THE INVENTION

Electrostatic actuators have become selected as the solution of choice for actuators that employ low power, operate at high speed, require low cost to produce, and are of small size. These devices present significant advantages: over thermal devices by requiring much less power; over electromagnetic devices using less power and having smaller size; or piezoelectric actuators that have a higher cost and have a much smaller amplitude of motion.

To date, however, there are no commercially available electrostatic actuators. Of particular concern are electrostatic actuation in the presence of dielectrically isolated electrodes, where specific problems are incurred.

In electrostatic actuators, the desired displacement is the result of the attractive electrostatic force generated by the interaction between a distribution of opposite sign charges placed on two bodies, one of which is moveable. For the purposes of this invention, these two bodies are known as actuator plates. The actuator plates are placed apart by a predetermined distance. The charge distribution is then generated by applying a potential difference between two conductive electrodes that are part of the actuator plates. The actuator will be in the ON state or mode when a potential difference is applied between the electrodes and will be in the OFF state when the electrodes are at the same potential.

One family of patents describes fluid control employing microminiature valves, sensors and other components using a main passage between one inlet and exit port and additionally a servo passage between inlet and outlet ports. The servo passage is controlled by a control flow tube such that tabs are moved electrostatically. United States Patent No. 5,176,358 to Bonne et al teaches such a fluid regulating device, while divisional United States Patent Nos. 5,323,999 and 5,441,597 relate to alternative embodiments.

The actual electrostatic device is only briefly described in the above patents, wherein at least one tab formed as part of a dielectric layer moves toward and away from an aperture upon activation of a means for varying the potential of at least one electrode associated therewith to generate an electrostatic force.

The above referenced patents identify another family of patents for further information on microvalves using electrostatic forces. The pending U.S. patent application referred to in those first discussed patents has matured into United States Patent No. 5,082,242 to Bonne et al. This patent describes a microvalve that is an integral structure made on one piece of silicon such that the device is a flow through valve with inlet and outlet on opposite sides of the silicon wafer. The valves are closed by contact with a valve seat where surfaces must be matched in order to avoid degradation of valve performance. Two patents, United States Patent Nos. 5,180,623 and 5,244,537 are divisional patents relating to the first patent. These patents generally describe operation of the electrostatic valve as being driven by various kinds of voltage sources. Specifically, the valve is said to operate as a two position valve with fully open and fully closed positions by applying a DC voltage between electrodes. Also, operation as a proportional control valve is disclosed as being effected by applying a voltage proportional to the voltage necessary to close the valve. Finally, These patents describe operation of the valve with a pulse width modulated voltage signal to modulate gas flow through the valve.

WO 92/22763 A discloses an electrostatic actuator device comprising a stationary support and a resilient, electrically conductive membrane, which forms a buckled moveable support due to its internal spring force and with the stationary support defines a chamber. In one embodiment the stationary support is provided with first and second separated electrodes, while the membrane forms a third electrode. A lever is attached to the centre of the buckled membrane. Selective application of voltages to the electrodes on the stationary support brings one side or the other of the buckled membrane into contact with the stationary support, thus causing the lever to rock. The chamber is filled with a preferably non-compressible fluid, which, when the voltage is switched from one electrode to the other, provides a restoring force to restore the buckle to that side of the membrane facing the electrode from which the voltage has been removed.

WO 97/29538 A discloses another electrostatic actuator device in which two silicon membranes buckle due to intrinsic compressive stress and form with a stationary support two fluid-filled chambers connected by a channel. The two membranes are arranged to buckle in opposite directions, so that one chamber is collapsed while the other chamber is expanded. The parts of the stationary support forming the bases of the two chambers are provided with respective drive electrodes. Applying a voltage to one of the electrodes attracts the corresponding membrane towards the stationary support. In the process the fluid in the collapsing chamber is forced through the connecting channel into the other chamber, thus providing a restoring force to push the other membrane up.

In some electrostatic actuators, the actuator plates have to come in intimate contact during the normal operation cycle. These actuators are sometimes referred to as touch-mode electrostatic actuators. In order to prevent electrical shorting during the touch phase of the operation cycle, the conductive electrodes are isolated from each other by dielectric layers. In order to get the maximum work from a specific device, large electric fields are usually developed between the two conductive electrodes. The non-linear character of the electrostatic attraction results in a snapping action, where the actuator plates move toward each other with accelerations as high as 108 g and speeds that exceed 103 m/sec. After the impact, the free surfaces of the actuator plates are pushed against each other by the large electrostatically generated pressure. This operation mode creates the possibility of very large mechanical impact and strong interaction forces being developed between the actuator plates. These forces can continue to act after removal of the potential difference between the actuator plates. In some cases, these forces are stronger than the restoring forces available for bringing the electrodes in their original position. In such a case, the two electrodes remain temporarily or permanently attached and the actuator stops functioning as intended and desired. This condition is sometimes referred to as 'stiction.' Electrostatic actuators in the prior art develop reduced restoring force that makes them prone to failure due to permanent stiction.

The main forces producing stiction in electrostatic actuators are surface interaction forces (solid bridging, Van der Waals forces, hydrogen bonds) and electrostatic forces produced by charges permanently or temporarily trapped into the dielectrics. To reduce the surface interaction forces, two approaches may be used. The first, reducing the contact area, requires more sophisticated structures and gives up some of the available electrostatic force. The second, reducing the surface energy of the layers in contact, has not yet been successfully demonstrated for devices based on that concept.

Another disadvantage of the electrostatic actuators of the prior art is that it is difficult to control their mechanical shape. It has become known that electrostatically driven actuators can supply high force when the separation gap between the moving parts is small. But, this constraint limits the maximum displacement attainable with electrostatically driven actuators to a few µm (microns) or less. To increase the maximum displacement without sacrificing the available force, a pre-stressed, upward bent cantilever structure with a rolling type motion was previously proposed. See the previously identified United States Patent No. 5,176,358 to Bonne et al, and the related patents. This structure does in fact have advantages over earlier electrostatic actuators in that there is a small separation gap between the electrodes at the hinge, resulting in high electrostatic force and, via the parabolic shape, a higher maximum displacement. It is a simple structure, with a single wafer and surface micromachining, and requires low voltage (few tens of volts) and very low power. However, this structure also has some drawbacks. It is very difficult to control the stress gradient, i.e., of the maximum displacement and of the restoring force. Also, there is a very small restoring force, sometimes smaller than the interfacial adhesion forces, resulting in a permanent stiction of the actuator parts. This causes failure of the device.

It would be of great advantage to the art if these difficulties leading to failure could be reduced or avoided altogether.

It would be another great advance in the art if an improved driving method for electrostatic actuators could be provided for use with any actuator and configuration of the physical components thereof.

Yet another advantage in the art would be attained if the stress gradient could somehow be reduced, permitting better control of the device.

Still another advantage would be achieved if a device could be prepared that prevented permanent stiction, which is known to be the most important failure mechanism in touch mode actuators.

Other advantages will appear hereinafter.

### SUMMARY OF THE INVENTION

It has now been discovered that the above and other objects of the present invention may be accomplished by an electrostatic actuator according to the appended claim 1, an electrostatically driven microvalve according to claim 13 and a method of making an electrostatic actuator device according to claim 25. Specifically, the present invention provides an improved, buckled structure that removes the disadvantages of the prior art without giving up the advantages that have been achieved.

The actuator of this invention is a multi-phase buckled actuator that keeps the presently known simple structure, large electrostatic force and large displacement, while adding the important advantage of a high restoring force and much easier control of shape, reducing the devastation caused by stiction in the prior art. The actuator may be used with microvalves to improve their efficiency.

The actuator of this invention comprises a bridge type structure supported on both sides that has embedded electrodes. The electrodes on the bridge are isolated from the electrodes on the support to prevent electrical shorting in the touch mode operation. This is accomplished by adding an insulation layer over either the electrode in the bridge or on the support, or both.

The buckled electrode has a shape configured to transmit a restoring force to its portion in contact with the stationary support upon application of voltage to a pair of electrodes not already engaged.

The preferred voltage provides a multi-phase driving force including a voltage to the first pair of electrodes for a period of time in a cycle of operation and a voltage to the second pair of electrodes for a period of time in the same cycle, preferably with an interim period of time with no voltage applied after each application of voltage.

A plurality of such actuators can be connected in parallel such as to form two dimensional arrays of actuators. The actuators in the array could be addressed all at the same time or addressed individually, depending on the intended use of the array.

### BRIEF DESCRIPTION OF THE DRAWINGS

For a more complete understanding of the invention, reference is hereby made to the drawings, in which:
FIGS. 1A, 1B and 1C are schematic views of an embodiment of the present invention, showing the actuator in three stages of operation;
FIG. 2 is an illustration of the driving voltage for the device of FIG. 1;
FIG. 3 is a schematic view of an alternative embodiment of a device similar to that shown in FIG. 1, also illustrating two-phase driving;
FIGS 4 and 5 are schematic views of alternative embodiments in which four electrodes are employed, each in a different configuration;
FIGS 6A, 6B, 7A and 7B illustrate two normally open microvalve embodiments using the actuator of this invention, showing both the open and closed states of each;
FIGS. 8A, 8B, 8C, 9A, 9B and 9C are schematic views illustrating two alternative forms of three-way microvalves; and
FIGS. 10A and 10B are schematic views of arrays of actuators according to the present invention, in which the arrays in FIG. 10A are addressed globally and the arrays in FIG. 10B are addressed individually.

### DETAILED DESCRIPTION OF THE PREFERRED EMBODIMENT

The present invention is defined by the use of a buckled structure that removes the drawbacks of the prior art design without giving up the newly found advantages. The electrostatic actuator of the present invention employs a buckled bridge structure. As in the prior art, there is a small separation gap at the supports, resulting in high electrostatic force. There is high maximum displacement with center deflection. It is a simple structure, formed on a single wafer by surface micromachining. Of course, it has a low driving voltage and very low power.

Because of its unique shape, the buckled bridge structure has a maximum displacement that is controlled by an average compressive stress instead of a stress gradient. The average stress is easier to control than the gradient. Moreover, a high restoring force is generated by the structure, by using a three (or more) electrode structure. This feature prevents permanent stiction, which is the most important failure mechanism in touch mode actuators and which has not been done before in electrostatic actuators. The actuators thus make extremely reliable and effective driving forces for microvalves and other devices where reliability and avoidance of stiction is important.

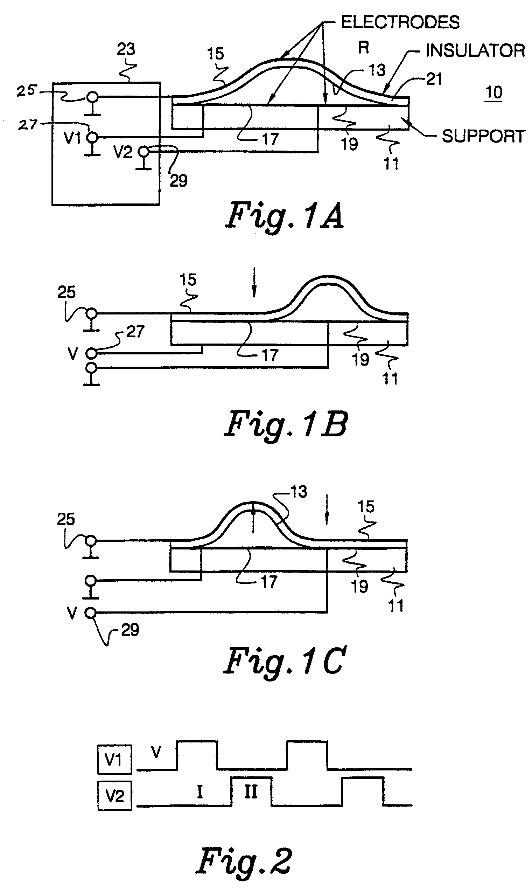

As shown in FIG. 1A, the actuator 10, generally, includes a stationary support 11 to which is fastened a buckled support 13. Buckled support 13 is supported at both ends on to stationary support 11, and is longer than the distance between supports. A preferred method of forming this buckled support 13 is by sacrificial layer etch, a commonly known semiconductor processing technique. When released, the bridge will form a bubble.

In the basic embodiment of this invention, a first electrode 15 is formed on buckled support 13 and a second and third electrodes 17 and 19 are formed on the stationary support. Non conducting insulation 21 is placed on the first electrode 15, or on the two electrodes 17 and 19 on support 11, or on both to insure no electrical conductivity. The structure must have at least three electrodes, but other embodiments shown below will incorporate at least one additional electrode.

The actuator 10 in FIGS. 1A, 1B and 1C has a voltage supply means 23, which in this embodiments comprises a voltage source connection 25 connected to first electrode 15, a second voltage source connection 27 connected to second electrode 17 and a third voltage source connection 29 connected to third electrode 19. In the idle state shown in FIG. 1A, the voltage at connection 27 equals the voltage at connection 29, and both are at zero volts. When an operating voltage V for electrode 17 is applied at connection 27, as in FIG. 1B, the left side of bridge support 13 is pulled down so that electrodes 15 and 17 are in electrostatic (but electrically insulated) contact.

In prior art devices, stiction would sooner or later cause the two electrodes 15 and 17 to stick, preventing return upon release of the voltage at 27. In the present invention, however, application of voltage at voltage source 29 pulls down first electrode 15 toward third electrode 19. Translation of the bubble support 13 will actively strip first electrode 15 from second electrode 17 from the substrate, providing a restoring force against the stiction.

FIG. 2 illustrates suitable driving voltages for the device of FIGS. 1A, 1B and 1C, where sources 27 and 29 are potentials against zero voltage 25 to create the driving electrostatic force.

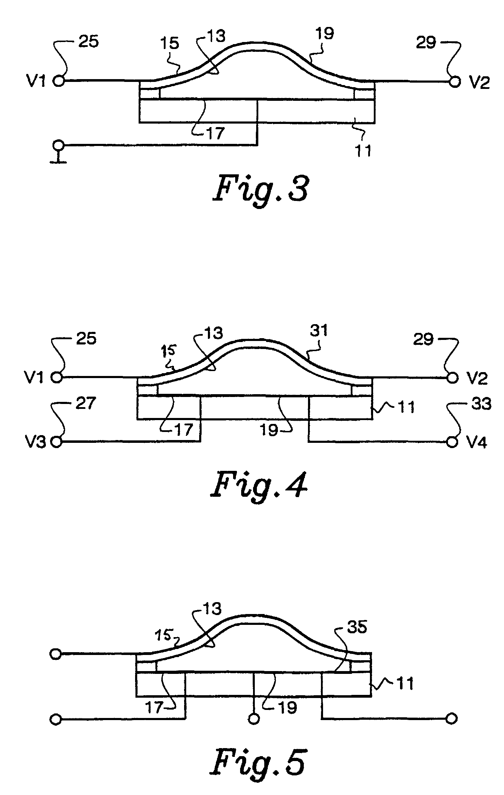

FIG. 3 illustrates an alternative embodiment using the same principles of this invention, where first electrode 15 is paired with third electrode 19 on buckled support 13 while second electrode 17 covers more of the surface of stationary support 11. Again, however, sequential application of two phase driving voltages via voltage sources 25 and 29 will cause the same alternating attraction between electrode pairs and, because of the buckled support construction, will have the same stripping force between electrodes no longer subjected to electrostatic force as that force is applied to the second pair of electrodes.

FIGS. 4 and 5 illustrate two additional embodiments of the present invention, in which a fourth electrode 31 is employed. In FIG. 4, the fourth electrode 31 is on the buckled, moveable support 13, so that electrodes 15 and 17 form one pair and electrodes 19 and 31 form a second pair. This embodiment is essentially a combination of those shown in FIGS. 1 and 3, with both stationary support 11 and buckled support 13 having two electrodes. In FIG. 5, buckled support 13 has first electrode 15, as in FIG. 1, and stationary support 11 has second electrode 17, third electrode 19 and fourth electrode 35, as shown. Both FIGS. 4 and 5 are driven by multiphase driving, via a voltage source as required. FIG. 4 includes four voltage source connections, 25, 27, 29 and 33, respectively, while FIG. 5 includes a different multiphase driving version, not numbered.

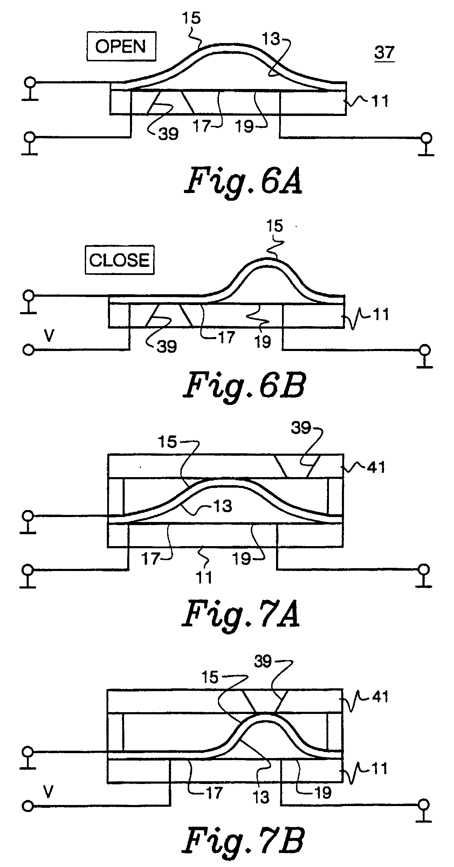

As was noted above, the present invention is admirably suited for use in microvalve systems due to the ability of the electrostatic actuator described herein to eliminate stiction. Shown in FIGS. 6A and 6B are the open and closed versions respectively of an electrostatically driven microvalve 37, generally, which defines a valve chamber and includes a valve opening 39 in stationary substrate 11. Second electrode 17 is formed to permit passage of fluids through opening 39, as in FIG. 6A; when the electrostatic forces bring first electrode 15 on to second electrode 17, the buckled moveable support 13 closes valve opening 39, as shown in FIG. 6B. In this embodiment, electrostatic forces bring the electrodes together to close the valve opening.

In FIGS. 7A and 7B, a second stationary support 41 helps define the valve chamber with first stationary support 11, and second support 41 includes a valve opening 39 to function in a normally open, electrostatically driven microvalve, similar to FIGS. 6A and 6B, but with closure of the valve opening 39 caused by activation of attraction between first electrode 15 and second electrode 17, wherein the buckled moveable support 13 engages and closes valve opening 39. In this case closure of the valve opening is caused by the buckled support moving into engagement as the other portion of the electrode is electrostatically actuated.

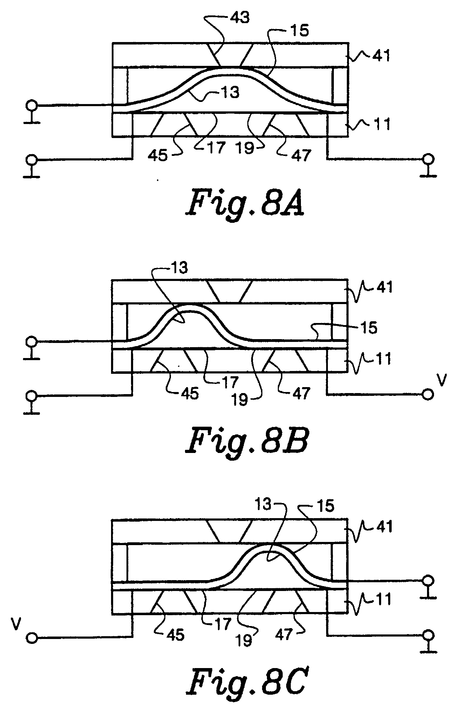

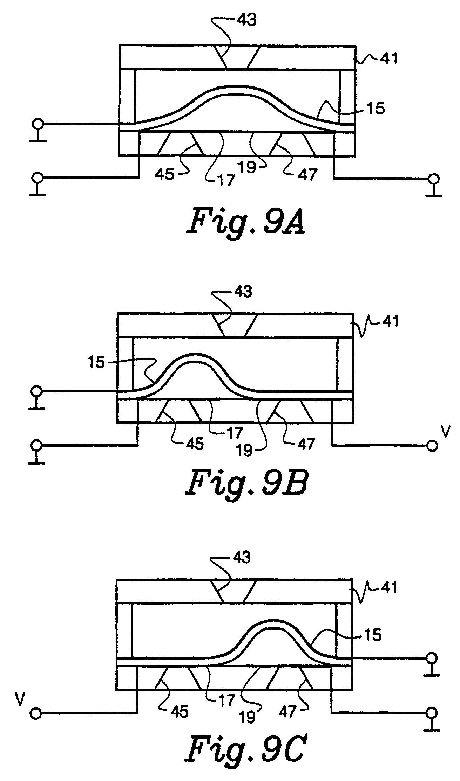

Yet another embodiment of the present invention is shown in FIGS. 8A, 8B, 8C, 9A, 9B and 9C, as follows. In FIGS. 8A, 8B, and 8C, the three way microvalve is shown with valve openings in first stationary support 11 and in second stationary support 41, again defining a valve chamber. As can be seen in FIGS. 8A, 8B, and 8C, valve openings 43, 45 and 47 are, at various times in the multiphase driving cycle, open or closed as buckled moveable support engages one or another electrode and provides restoring forces to separate other pairs of electrodes, as previously described herein. Valve opening 43 is normally closed, and valve openings 45 and 47 normally open. Valve opening 43 opens and valve openings 45 and 47 open and close respectively during operation of the electrostatic driving forces.

FIGS. 9A, 9B and 9C illustrate an alternative version of a three way valve, in which the valve opening 43 in the top substrate 41 has a normally open condition, rather than the normally closed version of FIG. 8A. Again, valve openings 45 and 47 open and close in sequence.

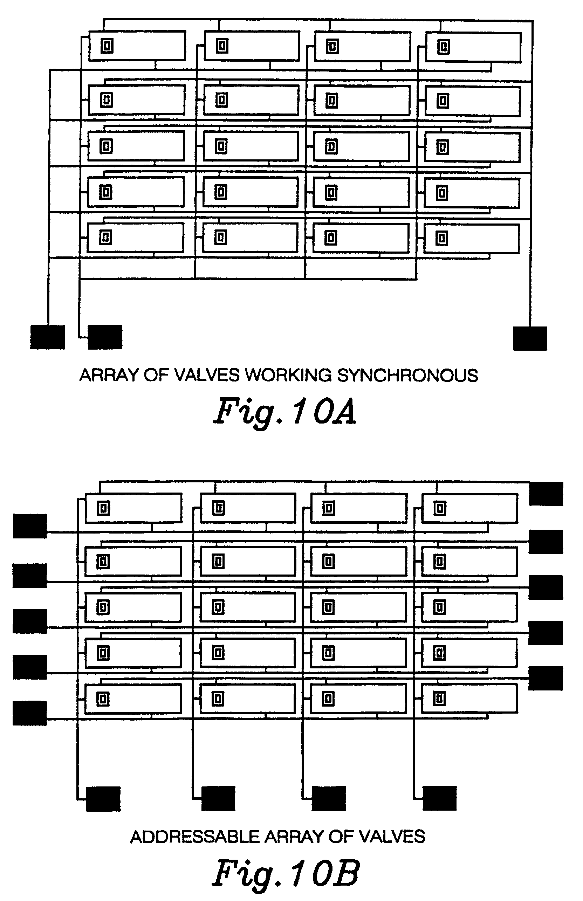

FIGS. 10A and 10B illustrate two embodiments in which a plurality of the various above described actuators are connected in parallel in order to meet a wider range of pressures and flow regimes. Specifically, FIG. 10A illustrates an array in which all of the actuators are addressed at the same time so that the valves work synchronously, so that each actuator contributes to the total output of the array. In FIG. 10B, each valve can be addressed and actuated individually, allowing the control of pressure and flow over a markedly extended range of values.

All of the embodiments shown herein take advantage of the out-of-place, buckled state of a doubly supported moveable support as it moves into and out of engagement with electrodes on the stationary support. A rolling type, electrostatic actuation will push the extra length of the structure of the bubble toward the non-actuated areas, providing a restoring force against stiction forces. For increased mechanical strength and to protect against overpressure, all the structures can have a top cap -like second support 41, for example- acting as a stopper.

While particular embodiments of the present invention have been illustrated and described, it is not intended to limit the invention, except as defined by the following claims.

## Claims

1. An electrostatic actuator device, comprising:
a stationary support (11) and a buckled, moveable support (13) having two ends mounted on said stationary support and positioned to enter into contact with a portion of said stationary support, said buckled, moveable support (13) being compressed by having a length greater than the distance between its mounting supports to provide said buckle, said supports being non conductive;
at least first (15), second (17) and third (19) separated electrodes, said first (15) electrode being mounted on said buckled moveable support (13) and said second (17) electrode being mounted on said stationary support, said third (19) electrode being mounted selectively on one of said supports, said electrodes being positioned to form first and second pairs of opposing electrodes for electrostatic attraction between each opposing electrode;
insulating means (21) for preventing electrically conductive contact between said electrodes; and
a voltage supply means (23) for supplying a voltage to provide electrostatic attraction selectively between said pairs of opposing electrodes and move a pair of electrodes into electrostatic contact;
said buckled electrode having a shape configured to transmit restoring force to the portion thereof in contact with the stationary support upon application of voltage to the other pair of electrodes.

2. The device of claim 1. wherein said voltage supply means (23) provides a two phase driving force including a first voltage (27) to said first pair of electrodes for a first period of time in a cycle of operation and a second voltage (27) to said second pair of electrodes for a second period of time in said same cycle.

3. The device of claim 1, wherein said voltage supply means (23) provides an interim period of time with no voltage to either pair of electrodes after each application of voltage to each pair of electrodes.

4. The device of claim 1, wherein said first (15) and third electrodes (19) are mounted on said buckled support (13) and said second electrode (17) is mounted on said stationary support (11), said second electrode (17) being sized and positioned to form a pair of electrodes with each of said first (15) and third (19) electrodes on said buckled support, whereby electrostatic attraction between one of said pair of electrodes causes a restoring movement of said buckled support to separate the other of said pair of electrodes.

5. The device of claim 1, wherein said first electrode (15) is mounted on said buckled support (13) and said second (17) and third (19) electrodes are mounted on said stationary support (11), said first (15) electrode being sized and positioned to form a pair of electrodes with each of said second (17) and third (19) electrodes on said stationary support, whereby electrostatic attraction between one of said pair of electrodes causes a restoring movement of said buckled support to separate the other of said pair of electrodes.

6. The device of claim 1, which further includes at least a fourth (31) electrode mounted on one of said supports, said voltage supply means (21) being adapted to supply a voltage to provide electrostatic attraction selectively between separate pairs of opposing electrodes to move only one pair of electrodes into electrostatic contact at any time.

7. The device of claim 6, wherein said first (15) and third (19) electrodes are mounted on said buckled support (13) and said second (17) and fourth (31) electrodes are mounted on said stationary support (11), said electrodes being sized and positioned to form a pair of electrodes with said first (15) and second (17) electrodes and said third (19) and fourth (31) electrodes, whereby electrostatic attraction between one of said pair of electrodes causes a restoring movement of said buckled support to separate the other of said pair of electrodes.

8. The device of claim 6, wherein said first electrode (15) is mounted on said buckled support (13) and said second (17), third (19) and fourth (31) electrodes are mounted on said stationary support (11), said first (15) electrode being sized and positioned to form separate pairs of electrodes with said second (17), third (19) and fourth (31) electrodes, whereby electrostatic attraction between one of said pair of electrodes causes a restoring movement of said buckled support to separate the other of said pairs of electrodes.

9. The device of claim 6, wherein said first (15), third (19), and fourth (31) electrodes are mounted on said buckled support (13) and said second electrode (17) is mounted on said stationary support (11), said second (17) electrode being sized and positioned to form separate pairs of electrodes with said first (15), third (19) and fourth (31) electrodes, whereby electrostatic attraction between one of said pairs of electrodes causes a restoring movement of said buckled support to separate the other of said pairs of electrodes.

10. The device of claim 1, wherein said actuator forms a microvalve (37) and said electrodes are positioned to provide a normally open valve.

11. The device of claim 1, wherein said actuator forms a microvalve (37) and said electrodes are positioned to provide a normally closed valve.

12. The device of claim 1, wherein said actuator forms a microvalve (37) having at least three valve openings (43) (45) and (47) and said electrodes are positioned provide an open condition selectively for said three valve openings.

13. An electrostatically driven microvalve, comprising:
a chamber defining at least one.valve opening (39);
a stationary support (11) positioned in said chamber;
a buckled, moveable support (13) having two ends mounted on said stationary support and positioned to enter into contact with a portion of said stationary support, said buckled, moveable support (13) being compressed by having a length greater than the distance between its mounting supports to provide said buckle, said supports being non conductive and said buckled moveable support (13) being positioned for selective opening and closing said at least one valve opening (39) upon movement of said buckled support;
at least first (15), second (17) and third (19) separated electrodes, said first electrode (15) being mounted on said buckled moveable support (13) and said second electrode (17) being mounted on said stationary support (11), said third electrode (19) being mounted selectively on one of said supports, said electrodes being positioned to form first and second pairs of opposing electrodes for electrostatic attraction between each opposing electrode;
insulating means (21) for preventing electrically conductive contact between said electrodes; and
a voltage supply means (23) for supplying a voltage to provide electrostatic attraction selectively between said pairs of opposing electrodes and move said buckled support to bring a pair of electrodes into electrostatic contact;
said buckled electrode having a shape configured to transmit restoring force to the portion thereof in contact with the stationary support upon application of voltage to the other pair of electrodes.

14. The device of claim 13, wherein said voltage supply means (23) provides a two phase driving force including a first voltage (25) to said first pair of electrode for a first period of time in a cycle of operation and a second voltage (27) to said second pair of electrodes for a second period of time in said same cycle.

15. The device of claim 13, wherein said voltage supply means (23) provides an interim period of time with no voltage to either pair of electrodes after each application of voltage to each pair of electrodes.

16. The device of claim 13, wherein said first (15) and third electrodes (19) are mounted on said buckled support (13) and said second electrode (17) is mounted on said stationary support, said second (17) electrode being sized and positioned to form a pair of electrodes with each of said first (15) and third (19) electrodes on said buckled support, whereby electrostatic attraction between one of said pair of electrodes causes a restoring movement of said buckled support to separate the other of said pair of electrodes.

17. The device of claim 13, wherein said first electrode (15) is mounted on said buckled support (13) and said second (17) and third (19) electrodes are mounted on said stationary support (11), said first electrode (15) being sized and positioned to form a pair of electrodes with each of said second (17) and third (19) electrodes on said stationary support (11), whereby electrostatic attraction between one of said pair of electrodes causes a restoring movement of said buckled support to separate the other of said pair of electrodes.

18. The device of claim 13, which further includes at least a fourth electrode (31) mounted on one of said supports, said voltage supply means (23) being adapted to supply a voltage to provide electrostatic attraction selectively between separate pairs of opposing electrodes to move only one pair of electrodes into electrostatic contact at any time.

19. The device of claim 18. wherein said first (15) and third (19) electrodes are mounted on said buckled support (13) and said second (17) and fourth (31) electrodes are mounted on said stationary support (11), said electrodes being sized and positioned to form a pair of electrodes with said first (15) and second (17) electrodes and said third (19) and fourth (31) electrodes, whereby electrostatic attraction between one of said pair of electrodes causes a restoring movement of said buckled support to separate the other of said pair of electrodes.

20. The device of claim 18, wherein said first electrode (15) is mounted on said buckled support (13) and said second (17), third (19) and fourth (31) electrodes are mounted on said stationary support (11), said first electrode (15) being sized and positioned to form separate pairs of electrodes with said second (17), third (19) and fourth (31) electrodes, whereby electrostatic attraction between one of said pair of electrodes causes a restoring movement of said buckled support to separate the other of said pairs of electrodes.

21. The device of claim 18, wherein said first (15), third (19) and fourth (31) electrodes are mounted on said buckled support and said second (17) electrode is mounted on said stationary support said second (17) electrode being sized and positioned to form separate pairs of electrodes with said first (15), third (19) and fourth (31) electrodes, whereby electrostatic attraction between one of said pair of electrodes causes a restoring movement of said buckled support to separate the other of said pairs of electrodes.

22. The device of claim 13, wherein said electrodes are positioned to provide a normally open valve.

23. The device of claim 13, wherein said electrodes are positioned to provide a normally closed valve.

24. The device of claim 13, wherein said chamber has at least three valve openings (43) (45) and (47) and said buckled moveable support (13) is positioned to selectively operate as a three way microvalve.

25. A method of making an electrostatic actuator device. comprising the steps of:
providing a stationary support (11) and mounting a buckled, moveable support (13) having two ends on said stationary support (11) and positioning said moveable support (13) to enter into contact with a portion of said stationary support (11), said buckled moveable support (13) being compressed by having a length greater than the distance between its mounting supports to provide said buckle, said supports being non conductive;
mounting at least first (15), second (17) and third (19) separated electrodes on said supports, said first (15) electrode being mounted on said buckled moveable support (13) and said second (17) electrode being mounted on said stationary support (11), said third (19) electrode being mounted selectively on one of said supports, said electrodes being positioned to form first and second pairs of opposing electrodes for electrostatic attraction between each opposing electrode;
insulating said electrodes to prevent electrically conductive contact between said electrodes; and
electrically connecting a voltage supply means (23) to said electrodes for supplying a voltage to provide electrostatic attraction selectively between said pairs of opposing electrodes and move said buckled support to bring a pair of electrodes into electrostatic contact; said buckled electrode having a shape configured to transmit restoring force to the portion thereof in contact with the stationary support (11) upon application of voltage to the other pair of electrodes.

26. The method of claim 25, wherein said voltage supply means (23) is adapted to provide a two phase driving force including a first voltage (25) to said first pair of electrode for a first period of time in a cycle of operation and a second voltage (27) to said second pair of electrodes for a second period of time in said same cycle.

27. The method of claim 25, wherein said voltage supply means (23) is adapted to provide an interim period of time with no voltage to either pair of electrodes after each application of voltage to each pair of electrodes.

28. The method of claim 25, which includes the steps of mounting said first (15) and third (19) electrodes on said buckled support and mounting said second (17) electrode on said stationary support (11), said second (17) electrode being sized and positioned to form a pair of electrodes with each of said first (15) and third (19) electrodes on said buckled support, whereby electrostatic attraction between one of said pair of electrodes causes a restoring movement of said buckled support to separate the other of said pair of electrodes.

29. The method of claim 25, wherein which includes the steps of mounting said first (15) electrode on said buckled support and mounting said second (17) and third (19) electrodes on said stationary support (11), said first (15) electrode being sized and positioned to form a pair of electrodes with each of said second (17) and third (19) electrodes on said stationary support (11), whereby electrostatic attraction between one of said pair of electrodes causes a restoring movement of said buckled support to separate the other of said pair of electrodes.

30. The method of claim 25, which further includes the step of mounting at least a fourth (31) electrode on one of said supports, said voltage supply means (23) being adapted to supply a voltage to provide electrostatic attraction selectively between separate pairs of opposing electrodes to move only one pair of electrodes into electrostatic contact at any time.

31. The method of claim 30, which includes the step of mounting said first (15) and third (19) electrodes on said buckled support and mounting said second (17) and fourth (31) electrodes on said stationary support (11), said electrodes being sized and positioned to form a pair of electrodes with said first (15) and second (17) electrodes and said third (19) and fourth (31) electrodes, whereby electrostatic attraction between one of said pair of electrodes causes a restoring movement of said buckled support to separate the other of said pair of electrodes.

32. The method of claim 30, which includes the step of mounting said first (15) electrode on said buckled support and mounting said second (17), third (19) and fourth (31) electrodes on said stationary support (11), said first (15) electrode being sized and positioned to form separate pairs of electrodes with said second (17), third (19) and fourth (31) electrodes, whereby electrostatic attraction between one of said pair of electrodes causes a restoring movement of said buckled support to separate the other of said pairs of electrodes.

33. The method of claim 30, which includes the step of mounting said first (15) third (19) and fourth (31) electrodes on said buckled support and mounting said second (17) electrode on said stationary support (11), said second (17) electrode being sized and positioned to form separate pairs of electrodes with said first (15), third (19) and fourth (31) electrodes, whereby electrostatic attraction between one of said pair of electrodes causes a restoring movement of said buckled support to separate the other of said pairs of electrodes.

34. A method of making a microvalve, comprising the steps of:
forming a microvalve chamber defining at least one valve opening (39); and
positioning the device of claim 1 therein.

35. The method of claim 34, which includes the steps of providing said chamber with at least three valve openings (43) (45) and (47) and positioning said buckled moveable support (13) to selectively cooperate with said three valve openings (43) (45) and (47) to function as a three way microvalve.

36. The method of claim 34, which includes the steps of providing a plurality of said electrostatic devices, each device being configured with first (15), second (17) and third valve openings; and
connecting array flow means to said plurality of electrostatic devices in parallel, including a first input source for supplying a common input to said first (43) valve opening in each of said devices, a second input source for supplying a common input to said second (45) valve opening in each of said devices, and a first output for receiving a common output from said third (47) valve opening in each of said devices.

37. The method of claim 34, which includes the steps of providing a plurality of said electrostatic devices, each device being configured with first (43), second (45) and third valve openings; and
connecting array flow means to said plurality of electrostatic devices in parallel, including a first input source for supplying a separate input to said first (43) valve opening in each of said devices, a second input source for supplying a separate input to said second (45) valve opening in each of said devices, and a first output for receiving a separate output from said third (47) valve opening, in each of said devices.

38. An array of electrostatic devices, comprising a plurality of electrostatic devices of claim 24, each being configured with first (43), second (45) and third valve openings; and
array flow means connecting said plurality of electrostatic devices in parallel, including a first input source for supplying a common input to said first (43) valve opening in each of said devices, a second input source for supplying a common input to said second (45) valve opening in each of said devices, and a first output for receiving a common output from said third valve opening in each of said devices.

39. An array of electrostatic devices, comprising a plurality of electrostatic devices of claim 24, each being configured with first (43), second (45) and third (47) valve openings; and
array flow means connecting said plurality of electrostatic devices in parallel, including a first input source for supplying a separate input to said first (43) valve opening in each of said devices, a second input source for supplying a separate input to said second (45) valve opening in each of said devices, and a first output for receiving a separate output from said third (47) valve opening in each of said devices.

## Patentansprüche

1. Elektrostatische Betätigungselementvorrichtung mit folgendem:
einem ortsfesten Träger (11) und einem verformten beweglichen Träger (13), bei dem zwei Enden an dem ortsfesten Träger befestigt und so positioniert sind, daß sie in Kontakt mit einem Teil des ortsfesten Trägers treten, wobei der verformte bewegliche Träger (13) dadurch zusammengedrückt wird, daß er eine größere Länge als die Entfernung zwischen seinen Befestigungsträgern aufweist, um die Verformung bereitzustellen, wobei die Träger nicht leitfähig sind;
mindestens einer ersten (15), zweiten (17) und dritten (19) getrennten Elektrode, wobei die erste (15) Elektrode an dem verformten beweglichen Träger (13) und die zweite (17) Elektrode an dem ortsfesten Träger und die dritte (19) Elektrode selektiv an einem der Träger befestigt ist, wobei die Elektroden so positioniert sind, daß sie erste und zweite Paare von Gegenelektroden zur elektrostatischen Anziehung zwischen der jeweiligen Gegenelektrode bilden;
einem Isoliermittel (21) zum Verhindern eines elektrisch leitenden Kontakts zwischen den Elektroden; und
einem Spannungsversorgungsmittel (23) zum Zuführen einer Spannung zum selektiven Bereitstellen einer elektrostatischen Anziehung zwischen den Paaren von Gegenelektroden und Bewegen eines Elektrodenpaars in elektrostatischen Kontakt;
wobei die verformte Elektrode eine Form zur Übertragung einer Rückstellkraft zu dem im Kontakt mit dem ortsfesten Träger befindlichen Teil derselben bei Anlegen einer Spannung an das andere Elektrodenpaar aufweist.

2. Vorrichtung nach Anspruch 1, wobei das Spannungsversorgungsmittel (23) eine zweiphasige Antriebskraft mit einer ersten Spannung (25) zu dem ersten Elektrodenpaar für eine erste Zeitspanne in einem Betriebszyklus und einer zweiten Spannung (27) zum zweiten Elektrodenpaar für eine zweite Zeitspanne in demselben Zyklus bereitstellt.

3. Vorrichtung nach Anspruch 1, wobei das Spannungsversorgungsmittel (23) nach jedem Anlegen einer Spannung an jedes Elektrodenpaar eine Zwischenzeitspanne ohne Spannung an den beiden Elektrodenpaaren bereitstellt.

4. Vorrichtung nach Anspruch 1, wobei die erste (15) und dritte Elektrode (19) am verformten Träger (13) befestigt sind und die zweite Elektrode (17) am ortsfesten Träger (11) befestigt ist, wobei die zweite Elektrode (17) so bemessen und positioniert ist, daß sie mit der jeweiligen ersten (15) und dritten (19) Elektrode am verformten Träger ein Elektrodenpaar bildet, wodurch die elektrostatische Anziehung zwischen dem einen Elektrodenpaar das Auseinandertrennen des anderen Elektrodenpaars durch eine Rückstellbewegung des verformten Trägers bewirkt.

5. Vorrichtung nach Anspruch 1, wobei die erste Elektrode (15) am verformten Träger (13) befestigt ist und die zweite (17) und dritte (19) Elektrode am ortsfesten Träger (11) befestigt sind, wobei die erste (15) Elektrode so bemessen und positioniert ist, daß sie mit der jeweiligen zweiten (17) und dritten (19) Elektrode am ortsfesten Träger ein Elektrodenpaar bildet, wodurch die elektrostatische Anziehung zwischen dem einen Elektrodenpaar das Auseinandertrennen des anderen Elektrodenpaars durch eine Rückstellbewegung des verformten Trägers bewirkt.

6. Vorrichtung nach Anspruch 1, weiterhin mit mindestens einer vierten (31), an einem der Träger befestigten Elektrode, wobei das Spannungsversorgungsmittel (21) zum Zuführen einer Spannung zum selektiven Bereitstellen einer elektrostatischen Anziehung zwischen getrennten Paaren von Gegenelektroden geeignet ist, um zu jeder Zeit nur ein Elektrodenpaar in elektrostatischen Kontakt zu bewegen.

7. Vorrichtung nach Anspruch 6, wobei die erste (15) und dritte (19) Elektrode an dem verformten Träger (13) und die zweite (17) und vierte (31) Elektrode an dem ortsfesten Träger (11) befestigt sind, wobei die Elektroden so bemessen und positioniert sind, daß sie ein Elektrodenpaar mit der ersten (15) und zweiten (17) Elektrode und der dritten (19) und vierten (31) Elektrode bilden, wodurch elektrostatische Anziehung zwischen dem einen Elektrodenpaar das Auseinandertrennen des anderen Elektrodenpaars durch eine Rückstellbewegung des verformten Trägers bewirkt.

8. Vorrichtung nach Anspruch 6, wobei die erste Elektrode (15) am verformten Träger (13) befestigt ist und die zweite (17), dritte (19) und vierte (31) Elektrode am ortsfesten Träger (11) befestigt sind, wobei die erste (15) Elektrode so bemessen und positioniert ist, daß sie mit der zweiten (17), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

9. Vorrichtung nach Anspruch 6, wobei die erste (15), dritte (19) und vierte (31) Elektrode am verformten Träger (13) befestigt sind und die zweite Elektrode (17) am ortsfesten Träger (11) befestigt ist, wobei die zweite (17) Elektrode so bemessen und positioniert ist, daß sie mit der ersten (15), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

10. Vorrichtung nach Anspruch 1, wobei das Betätigungselement ein Mikroventil (37) bildet und die Elektroden so positioniert sind, daß sie ein Schließventil bereitstellen.

11. Vorrichtung nach Anspruch 1, wobei das Betätigungselement ein Mikroventil (37) bildet und die Elektroden so positioniert sind, daß sie ein Öffnungsventil bereitstellen.

12. Vorrichtung nach Anspruch 1, wobei das Betätigungselement ein Mikroventil (37) mit mindestens drei Ventilöffnungen (43), (45) und (47) bildet und die Elektroden so positioniert sind, daß sie selektiv einen offenen Zustand für die drei Ventilöffnungen bereitstellen.

13. Elektrostatisch angetriebenes Mikroventil mit folgendem:
einer mindestens eine Ventilöffnung (39) definierenden Kammer;
einem in der Kammer positionierten ortsfesten Träger (11);
einem verformten beweglichen Träger (13), bei dem zwei Enden an dem ortsfesten Träger befestigt und so positioniert sind, daß sie in Kontakt mit einem Teil des ortsfesten Trägers treten, wobei der verformte bewegliche Träger (13) dadurch zusammengedrückt wird, daß er eine größere Länge als die Entfernung zwischen seinen Befestigungsträgern aufweist, um die Verformung bereitzustellen, wobei die Träger nicht leitfähig sind; und wobei der verformte bewegliche Träger (13) zum selektiven Öffnen und Schließen der mindestens einen Ventilöffnung (39) bei Bewegung des verformten Trägers positioniert ist;
mindestens einer ersten (15), zweiten (17) und dritten (19) getrennten Elektrode, wobei die erste Elektrode (15) an dem verformten beweglichen Träger (13) und die zweite Elektrode (17) an dem ortsfesten Träger (11) und die dritte Elektrode (19) selektiv an einem der Träger befestigt ist, wobei die Elektroden so positioniert sind, daß sie erste und zweite Paare von Gegenelektroden zur elektrostatischen Anziehung zwischen der jeweiligen Gegenelektrode bilden;
einem Isoliermittel (21) zum Verhindern eines elektrisch leitenden Kontakts zwischen den Elektroden; und
einem Spannungsversorgungsmittel (23) zum Zuführen einer Spannung zum selektiven Bereitstellen einer elektrostatischen Anziehung zwischen den Paaren von Gegenelektroden und Bewegen des verformten Trägers zum Überführen eines Elektrodenpaars in elektrostatischen Kontakt;
wobei die verformte Elektrode eine Form zur Übertragung einer Rückstellkraft zu dem im Kontakt mit dem ortsfesten Träger befindlichen Teil derselben bei Anlegen einer Spannung an das andere Elektrodenpaar aufweist.

14. Vorrichtung nach Anspruch 13, wobei das Spannungsversorgungsmittel (23) eine zweiphasige Antriebskraft mit einer ersten Spannung (25) zu dem ersten Elektrodenpaar für eine erste Zeitspanne in einem Betriebszyklus und einer zweiten Spannung (27) zum zweiten Elektrodenpaar für eine zweite Zeitspanne in demselben Zyklus bereitstellt.

15. Vorrichtung nach Anspruch 13, wobei das Spannungsversorgungsmittel (23) nach jedem Anlegen einer Spannung an jedes Elektrodenpaar eine Zwischenzeitspanne ohne Spannung an den beiden Elektrodenpaaren bereitstellt.

16. Vorrichtung nach Anspruch 13, wobei die erste (15) und dritte Elektrode (19) am verformten Träger (13) befestigt sind und die zweite Elektrode (17) am ortsfesten Träger befestigt ist, wobei die zweite (17) Elektrode so bemessen und positioniert ist, daß sie mit der jeweiligen ersten (15) und dritten (19) Elektrode am verformten Träger ein Elektrodenpaar bildet, wodurch die elektrostatische Anziehung zwischen dem einen Elektrodenpaar das Auseinandertrennen des anderen Elektrodenpaars durch eine Rückstellbewegung des verformten Trägers bewirkt.

17. Vorrichtung nach Anspruch 13, wobei die erste Elektrode (15) am verformten Träger (13) befestigt ist und die zweite (17) und dritte (19) Elektrode am ortsfesten Träger (11) befestigt sind, wobei die erste Elektrode (15) so bemessen und positioniert ist, daß sie mit der jeweiligen zweiten (17) und dritten (19) Elektrode am ortsfesten Träger (11) ein Elektrodenpaar bildet, wodurch die elektrostatische Anziehung zwischen dem einen Elektrodenpaar das Auseinandertrennen des anderen Elektrodenpaars durch eine Rückstellbewegung des verformten Trägers bewirkt.

18. Vorrichtung nach Anspruch 13, weiterhin mit mindestens einer vierten, an einem der Träger befestigten Elektrode (31), wobei das Spannungsversorgungsmittel (23) zum Zuführen einer Spannung zum selektiven Bereitstellen einer elektrostatischen Anziehung zwischen getrennten Paaren von Gegenelektroden geeignet ist, um zu jeder Zeit nur ein Elektrodenpaar in elektrostatischen Kontakt zu bewegen.

19. Vorrichtung nach Anspruch 18, wobei die erste (15) und dritte (19) Elektrode an dem verformten Träger (13) und die zweite (17) und vierte (31) Elektrode an dem ortsfesten Träger (11) befestigt sind, wobei die Elektroden so bemessen und positioniert sind, daß sie ein Elektrodenpaar mit der ersten (15) und zweiten (17) Elektrode und der dritten (19) und vierten (31) Elektrode bilden, wodurch elektrostatische Anziehung zwischen dem einen Elektrodenpaar das Auseinandertrennen des anderen Elektrodenpaars durch eine Rückstellbewegung des verformten Trägers bewirkt.

20. Vorrichtung nach Anspruch 18, wobei die erste Elektrode (15) am verformten Träger (13) befestigt ist und die zweite (17), dritte (19) und vierte (31) Elektrode am ortsfesten Träger (11) befestigt sind, wobei die erste Elektrode (15) so bemessen und positioniert ist, daß sie mit der zweiten (17), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

21. Vorrichtung nach Anspruch 18, wobei die erste (15), dritte (19) und vierte (31) Elektrode am verformten Träger befestigt sind und die zweite (17) Elektrode am ortsfesten Träger befestigt ist, wobei die zweite (17) Elektrode so bemessen und positioniert ist, daß sie mit der ersten (15), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

22. Vorrichtung nach Anspruch 13, wobei die Elektroden so positioniert sind, daß sie ein Schließventil bereitstellen.

23. Vorrichtung nach Anspruch 13, wobei die Elektroden so positioniert sind, daß sie ein Öffnungsventil bereitstellen.

24. Vorrichtung nach Anspruch 13, wobei die Kammer mindestens drei Ventilöffnungen (43), (45) und (47) aufweist und der verformte bewegliche Träger (13) so positioniert ist, daß er selektiv als Dreiwegemikroventil arbeitet.

25. Verfahren zum Herstellen einer elektrostatischen Betätigungselementvorrichtung mit folgenden Schritten:
Bereitstellen eines ortsfesten Trägers (11) und Befestigen eines verformten beweglichen Trägers (13) mit zwei Enden am ortsfesten Träger (11) und Positionieren des beweglichen Trägers (13), um mit einem Teil des ortsfesten Trägers (11) in Kontakt zu treten, wobei der verformte bewegliche Träger (13) dadurch zusammengedrückt wird, daß er eine größere Länge als die Entfernung zwischen seinen Befestigungsträgern aufweist, um die Verformung bereitzustellen, wobei die Träger nicht leitfähig sind;
Befestigen der mindestens ersten (15), zweiten (17) und dritten (19) getrennten Elektrode an den Trägern, wobei die erste (15) Elektrode an dem verformten beweglichen Träger (13) und die zweite (17) Elektrode an dem ortsfesten Träger (11) und die dritte (19) Elektrode selektiv an einem der Träger befestigt ist, wobei die Elektroden so positioniert sind, daß sie erste und zweite Paare von Gegenelektroden zur elektrostatischen Anziehung zwischen der jeweiligen Gegenelektrode bilden;
Isolieren der Elektroden zum Verhindern eines elektrisch leitenden Kontakts zwischen den Elektroden; und
elektrisches Verbinden eines Spannungsversorgungsmittels (23) mit den Elektroden zum Zuführen einer Spannung zum selektiven Bereitstellen einer elektrostatischen Anziehung zwischen den Paaren von Gegenelektroden und Bewegen eines Elektrodenpaars in elektrostatischen Kontakt; wobei die verformte Elektrode eine Form zur Übertragung einer Rückstellkraft zu dem im Kontakt mit dem ortsfesten Träger (11) befindlichen Teil derselben bei Anlegen einer Spannung an das andere Elektrodenpaar aufweist.

26. Verfahren nach Anspruch 25, wobei das Spannungsversorgungsmittel (23) zur Bereitstellung einer zweiphasigen Antriebskraft mit einer ersten Spannung (25) zum ersten Elektrodenpaar für eine erste Zeitspanne in einem Betriebszyklus und einer zweiten Spannung (27) zum zweiten Elektrodenpaar für eine zweite Zeitspanne im selben Zyklus geeignet ist.

27. Verfahren nach Anspruch 25, wobei das Spannungsversorgungsmittel (23) dazu geeignet ist, nach jedem Anlegen von Spannung an jedes Elektrodenpaar eine Zwischenzeitspanne ohne Spannung an den beiden Elektrodenpaaren bereitzustellen.

28. Verfahren nach Anspruch 25, mit den Schritten des Befestigens der ersten (15) und dritten (19) Elektrode am verformten Träger und Befestigens der zweiten (17) Elektrode am ortsfesten Träger (11) einschließt, wobei die zweite (17) Elektrode so bemessen und positioniert ist, daß sie mit der jeweiligen ersten (15) und dritten (19) Elektrode am verformten Träger ein Elektrodenpaar bildet, wodurch die elektrostatische Anziehung zwischen einem des Elektrodenpaars das Auseinandertrennen des anderen Elektrodenpaars durch eine Rückstellbewegung des verformten Trägers bewirkt.

29. Verfahren nach Anspruch 25 mit den Schritten des Befestigens der ersten (15) Elektrode am verformten Träger und des Befestigens der zweiten (17) und dritten (19) Elektrode am ortsfesten Träger (11), wobei die erste (15) Elektrode so bemessen und positioniert ist, daß sie mit der jeweiligen zweiten (17) und dritten (19) Elektrode am ortsfesten Träger (11) ein Elektrodenpaar bildet, wodurch die elektrostatische Anziehung zwischen dem einen Elektrodenpaar das Auseinandertrennen des anderen Elektrodenpaars durch eine Rückstellbewegung des verformten Trägers bewirkt.

30. Verfahren nach Anspruch 25, weiterhin mit dem Schritt des Befestigens von mindestens einer vierten (31) Elektrode an einem der Träger, wobei das Spannungsversorgungsmittel (23) zum Zuführen einer Spannung zum selektiven Bereitstellen einer elektrostatischen Anziehung zwischen getrennten Paaren von Gegenelektroden geeignet ist, um zu jeder Zeit nur ein Elektrodenpaar in elektrostatischen Kontakt zu bewegen.

31. Verfahren nach Anspruch 30 mit dem Schritt des Befestigens der ersten (15) und dritten (19) Elektrode am verformten Träger und des Befestigens der zweiten (17) und vierten (31) Elektrode am ortsfesten Träger (11), wobei die Elektroden so bemessen und positioniert sind, daß sie ein Elektrodenpaar mit der ersten (15) und zweiten (17) Elektrode und der dritten (19) und vierten (31) Elektrode bilden, wodurch elektrostatische Anziehung zwischen dem einen Elektrodenpaar das Auseinandertrennen des anderen Elektrodenpaars durch eine Rückstellbewegung des verformten Trägers bewirkt.

32. Verfahren nach Anspruch 30 mit dem Schritt des Befestigens der ersten (15) Elektrode am verformten Träger und des Befestigens der zweiten (17), dritten (19) und vierten (31) Elektrode am ortsfesten Träger (11), wobei die erste (15) Elektrode so bemessen und positioniert ist, daß sie mit der zweiten (17), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

33. Verfahren nach Anspruch 30 mit dem Schritt des Befestigens der ersten (15), dritten (19) und vierten (31) Elektrode am verformten Träger und des Befestigens der zweiten (17) Elektrode am ortsfesten Träger (11), wobei die zweite (17) Elektrode so bemessen und positioniert ist, daß sie mit der ersten (15), dritten (19) und vierten (31) Elektrode getrennte Elektrodenpaare bildet, wodurch die elektrostatische Anziehung zwischen dem einen Elektrodenpaar das Auseinandertrennen des anderen Elektrodenpaars durch eine Rückstellbewegung des verformten Trägers bewirkt.

34. Verfahren zur Herstellung eines Mikroventils mit folgenden Schritten:
Bilden einer mindestens eine Ventilöffnung (39) definierenden Mikroventilkammer; und
Positionieren der Vorrichtung nach Anspruch 1 in derselben.

35. Verfahren nach Anspruch 34 mit den Schritten des Bereitstellens von mindestens drei Ventilöffnungen (43), (45) und (47) in der Kammer und des Positionierens des verformten beweglichen Trägers (13) zur selektiven Zusammenwirkung mit den drei Ventilöffnungen (43), (45) und (47), so daß sie als Dreiwegemikroventil arbeiten.

36. Verfahren nach Anspruch 34 mit den Schritten des Bereitstellens von mehreren der elektrostatischen Vorrichtungen, die jeweils mit einer ersten (15), zweiten (17) und dritten Ventilöffnung ausgestattet sind; und
parallelen Verbindens von Flußmitteln der Anordnung mit den mehreren elektrostatischen Vorrichtungen mit einer ersten Eingangsquelle zum Zuführen einer gemeinsamen Eingabe in die erste (43) Ventilöffnung in jeder der Vorrichtungen, einer zweiten Eingangsquelle zum Zuführen einer gemeinsamen Eingabe in die zweite (45) Ventilöffnung in jeder der Vorrichtungen, und einem ersten Ausgang zum Aufnehmen einer gemeinsamen Ausgabe von der dritten (47) Ventilöffnung in jeder der Vorrichtungen.

37. Verfahren nach Anspruch 34 mit den Schritten des Bereitstellens von mehreren der elektrostatischen Vorrichtungen, die jeweils mit einer ersten (43), zweiten (45) und dritten Ventilöffnung ausgestattet sind; und
parallelen Verbindens von Flußmitteln der Anordnung mit den mehreren elektrostatischen Vorrichtungen mit einer ersten Eingangsquelle zum Zuführen einer getrennten Eingabe in die erste (43) Ventilöffnung in jeder der Vorrichtungen, einer zweiten Eingangsquelle zum Zuführen einer getrennten Eingabe in die zweite (45) Ventilöffnung in jeder der Vorrichtungen, und einem ersten Ausgang zum Aufnehmen einer getrennten Ausgabe von der dritten (47) Ventilöffnung in jeder der Vorrichtungen.

38. Anordnung elektrostatischer Vorrichtungen mit mehreren elektrostatischen Vorrichtungen nach Anspruch 24, die jeweils mit einer ersten (43), zweiten (45) und dritten Ventilöffnung ausgestattet sind; und
Flußmitteln der Anordnung, die die mehreren elektrostatischen Vorrichtungen parallel verbinden, mit einer ersten Eingangsquelle zum Zuführen einer gemeinsamen Eingabe in die erste (43) Ventilöffnung in jeder der Vorrichtungen, einer zweiten Eingangsquelle zum Zuführen einer gemeinsamen Eingabe in die zweite (45) Ventilöffnung in jeder der Vorrichtungen, und einem ersten Ausgang zum Aufnehmen einer gemeinsamen Ausgabe von der dritten Ventilöffnung in jeder der Vorrichtungen.

39. Anordnung elektrostatischer Vorrichtungen mit mehreren elektrostatischen Vorrichtungen nach Anspruch 24, die jeweils mit einer ersten (43), zweiten (45) und dritten (47) Ventilöffnung ausgestattet sind; und
Flußmitteln der Anordnung, die die mehreren elektrostatischen Vorrichtungen parallel verbinden, mit einer ersten Eingangsquelle zum Zuführen einer getrennten Eingabe in die erste (43) Ventilöffnung in jeder der Vorrichtungen, einer zweiten Eingangsquelle zum Zuführen einer getrennten Eingabe in die zweite (45) Ventilöffnung in jeder der Vorrichtungen, und einem ersten Ausgang zum Aufnehmen einer getrennten Ausgabe von der dritten (47) Ventilöffnung in jeder der Vorrichtungen.

## Revendications

1. Dispositif de commande électrostatique, comprenant:
un support stationnaire (11) et un support mobile déformé (13) ayant deux extrémités montées sur ledit support stationnaire et positionnées de manière à entrer en contact avec une portion dudit support stationnaire, ledit support mobile déformé (13) étant comprimé en ayant une longueur plus grande que la distance entre ses supports de montage afin de créer ladite déformation, lesdits supports étant non conducteurs;
au moins des première (15), deuxième (17) et troisième (19) électrodes séparées, ladite première électrode (15) étant montée sur ledit support mobile déformé (13) et ladite deuxième électrode (17) étant montée sur ledit support stationnaire, et ladite troisième électrode (19) étant montée sélectivement sur l'un desdits supports, lesdites électrodes étant positionnées de manière à former une première et une deuxième paires d'électrodes opposées destinées à créer une attraction électrostatique entre chaque électrode opposée;
un moyen d'isolation (21) destiné à empêcher un contact électriquement conducteur entre lesdites électrodes; et
un moyen de fourniture de tension (23) servant à amener une tension destinée à créer sélectivement une attraction électrostatique entre lesdites paires d'électrodes opposées et à déplacer une paire d'électrodes en contact électrostatique;
ladite électrode déformée présentant une configuration lui permettant de transmettre une force de rappel à la portion de celle-ci se trouvant en contact avec le support stationnaire lors de l'application d'une tension à l'autre paire d'électrodes.

2. Dispositif selon la revendication 1, dans lequel ledit moyen de fourniture de tension (23) fournit une force d'entraînement biphasée comprenant une première tension (25) à ladite première paire d'électrodes pendant une première période de temps dans un cycle de fonctionnement, et une deuxième tension (27) à ladite deuxième paire d'électrodes pendant une deuxième période de temps durant ledit même cycle.

3. Dispositif selon la revendication 1, dans lequel ledit moyen de fourniture de tension (23) offre une période de temps intermédiaire sans aucune tension appliquée à l'une quelconque des paires d'électrodes après chaque application de tension à chaque paire d'électrodes.

4. Dispositif selon la revendication 1, dans lequel lesdites première (15) et troisième (19) électrodes sont montées sur ledit support déformé (13), et ladite deuxième électrode (17) est montée sur ledit support stationnaire (11), ladite deuxième électrode. (17) étant dimensionnée et positionnée de manière à former une paire d'électrodes avec chacune desdites première (15) et troisième (19) électrodes sur ledit support déformé, une attraction électrostatique entre une première desdites paires d'électrodes provoquant ainsi un mouvement de rappel dudit support déformé visant à séparer l'autre desdites paires d'électrodes.

5. Dispositif selon la revendication 1, dans lequel ladite première électrode (15) est montée sur ledit support déformé (13) et lesdites deuxième (17) et troisième (19) électrodes sont montées sur ledit support stationnaire (11), ladite première électrode (15) étant dimensionnée et positionnée de manière à former une paire d'électrodes avec chacune desdites deuxième (17) et troisième (19) électrodes sur ledit support stationnaire, une attraction électrostatique entre une première desdites paires d'électrodes provoquant ainsi un mouvement de rappel dudit support déformé visant à séparer l'autre desdites paires d'électrodes.

6. Dispositif selon la revendication 1, comprenant en outre au moins une quatrième électrode (31) montée sur l'un desdits supports, ledit moyen de fourniture de tension (23) étant apte à amener une tension destinée à créer sélectivement une attraction électrostatique entre des paires séparées d'électrodes opposées en vue de déplacer une seule paire d'électrodes en contact électrostatique à n'importe quel moment.

7. Dispositif selon la revendication 6, dans lequel lesdites première (15) et troisième (19) électrodes sont montées sur ledit support déformé (13) et lesdites deuxième (17) et quatrième (31) électrodes sont montées sur ledit support stationnaire (11), lesdites électrodes étant dimensionnées et positionnées de manière à former une paire d'électrodes avec lesdites première (15) et deuxième (17) électrodes et lesdites troisième (19) et quatrième (31) électrodes, une attraction électrostatique entre une première desdites paires d'électrodes provoquant ainsi un mouvement de rappel dudit support déformé visant à séparer l'autre desdites paires d'électrodes.

8. Dispositif selon la revendication 6, dans lequel ladite première électrode (15) est montée sur ledit support déformé (13) et lesdites deuxième (17), troisième (19) et quatrième (31) électrodes sont montées sur ledit support stationnaire (11), ladite première électrode (15) étant dimensionnée et positionnée de manière à former des paires d'électrodes séparées avec lesdites deuxième (17), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

9. Dispositif selon la revendication 6, dans lequel lesdites première (15), troisième (19) et quatrième (31) électrodes sont montées sur ledit support déformé (13) et ladite deuxième électrode (17) est montée sur ledit support stationnaire (11), ladite deuxième électrode (17) étant dimensionnée et positionnée de manière à former des paires d'électrodes séparées avec lesdites première (15), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

10. Dispositif selon la revendication 1, dans lequel ledit dispositif de commande forme une micro-vanne (37), et lesdites électrodes sont positionnées de manière à fournir une vanne normalement ouverte.

11. Dispositif selon la revendication 1, dans lequel ledit dispositif de commande forme une micro-vanne (37), et lesdites électrodes sont positionnées de manière à fournir une vanne normalement fermée.

12. Dispositif selon la revendication 1, dans lequel ledit dispositif de commande forme une micro-vanne (37) comportant au moins trois ouvertures de vanne (43), (45) et (47), et lesdites électrodes sont positionnées de manière à fournir sélectivement un état ouvert pour lesdites trois ouvertures de vanne.

13. Micro-vanne commandée d'une façon électrostatique, comprenant:
une chambre définissant au moins une ouverture de vanne (39);
un support stationnaire (11) positionné dans ladite chambre;
un support mobile déformé (13) ayant deux extrémités montées sur ledit support stationnaire et positionnées de manière à entrer en contact avec une portion dudit support stationnaire, ledit support mobile déformé (13) étant comprimé en ayant une longueur plus grande que la distance entre ses supports de montage afin de créer ladite déformation, lesdits supports étant non conducteurs et ledit support mobile déformé (13) étant positionné de manière à ouvrir et à fermer sélectivement ladite au moins une ouverture de vanne (39) lors du mouvement dudit support déformé;
au moins des première (15), deuxième (17) et troisième (19) électrodes séparées, ladite première électrode (15) étant montée sur ledit support mobile déformé (13) et ladite deuxième électrode (17) étant montée sur ledit support stationnaire (11), et ladite troisième électrode (19) étant montée sélectivement sur l'un desdits supports, lesdites électrodes étant positionnées de manière à former une première et une deuxième paires d'électrodes opposées destinées à créer une attraction électrostatique entre chaque électrode opposée;
un moyen d'isolation (21) destiné à empêcher un contact électriquement conducteur entre lesdites électrodes; et
un moyen de fourniture de tension (23) servant à amener une tension destinée à créer sélectivement une attraction électrostatique entre lesdites paires d'électrodes opposées et à déplacer ledit support déformé de manière à amener une paire d'électrodes en contact électrostatique;
ladite électrode déformée présentant une configuration lui permettant de transmettre une force de rappel à la portion de celle-ci se trouvant en contact avec le support stationnaire lors de l'application d'une tension à l'autre paire d'électrodes.

14. Dispositif selon la revendication 13, dans lequel ledit moyen de fourniture de tension (23) fournit une force d'entraînement biphasée comprenant une première tension (25) à ladite première paire d'électrodes pendant une première période de temps dans un cycle de fonctionnement, et une deuxième tension (27) à ladite deuxième paire d'électrodes pendant une deuxième période de temps durant ledit même cycle.

15. Dispositif selon la revendication 13, dans lequel ledit moyen de fourniture de tension (23) offre une période de temps intermédiaire sans aucune tension appliquée à l'une quelconque des paires d'électrodes après chaque application de tension à chaque paire d'électrodes.

16. Dispositif selon la revendication 13, dans lequel lesdites première (15) et troisième (19) électrodes sont montées sur ledit support déformé (13), et ladite deuxième électrode (17) est montée sur ledit support stationnaire, ladite deuxième électrode (17) étant dimensionnée et positionnée de manière à former une paire d'électrodes avec chacune desdites première (15) et troisième (19) électrodes sur ledit support déformé, une attraction électrostatique entre une première desdites paires d'électrodes provoquant ainsi un mouvement de rappel dudit support déformé visant à séparer l'autre desdites paires d'électrodes.

17. Dispositif selon la revendication 13, dans lequel ladite première électrode (15) est montée sur ledit support déformé (13) et lesdites deuxième (17) et troisième (19) électrodes sont montées sur ledit support stationnaire (11), ladite première électrode (15) étant dimensionnée et positionnée de manière à former une paire d'électrodes avec chacune desdites deuxième (17) et troisième (19) électrodes sur ledit support stationnaire (11), une attraction électrostatique entre une première desdites paires d'électrodes provoquant ainsi un mouvement de rappel dudit support déformé visant à séparer l'autre desdites paires d'électrodes.

18. Dispositif selon la revendication 13, comprenant en outre au moins une quatrième électrode (31) montée sur l'un desdits supports, ledit moyen de fourniture de tension (23) étant apte à amener une tension destinée à créer sélectivement une attraction électrostatique entre des paires séparées d'électrodes opposées en vue de déplacer une seule paire d'électrodes en contact électrostatique à n'importe quel moment.

19. Dispositif selon la revendication 18, dans lequel lesdites première (15) et troisième (19) électrodes sont montées sur ledit support déformé (13) et lesdites deuxième (17) et quatrième (31) électrodes sont montées sur ledit support stationnaire (11), lesdites électrodes étant dimensionnées et positionnées de manière à former une paire d'électrodes avec lesdites première (15) et deuxième (17) électrodes et lesdites troisième (19) et quatrième (31) électrodes, une attraction électrostatique entre une première desdites paires d'électrodes provoquant ainsi un mouvement de rappel dudit support déformé visant à séparer l'autre desdites paires d'électrodes.

20. Dispositif selon la revendication 18, dans lequel ladite première électrode (15) est montée sur ledit support déformé (13) et lesdites deuxième (17), troisième (19) et quatrième (31) électrodes sont montées sur ledit support stationnaire (11), ladite première électrode (15) étant dimensionnée et positionnée de manière à former des paires d'électrodes séparées avec lesdites deuxième (17), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

21. Dispositif selon la revendication 18, dans lequel lesdites première (15), troisième (19) et quatrième (31) électrodes sont montées sur ledit support déformé et ladite deuxième électrode (17) est montée sur ledit support stationnaire, ladite deuxième électrode (17) étant dimensionnée et positionnée de manière à former des paires d'électrodes séparées avec lesdites première (15), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

22. Dispositif selon la revendication 13, dans lequel lesdites électrodes sont positionnées de manière à fournir une vanne normalement ouverte.

23. Dispositif selon la revendication 13, dans lequel lesdites électrodes sont positionnées de manière à fournir une vanne normalement fermée.

24. Dispositif selon la revendication 13, dans lequel ladite chambre comporte au moins trois ouvertures de vanne (43), (45) et (47), et ledit support mobile déformé (13) est positionné de manière à fonctionner sélectivement comme une micro-vanne à trois voies.

25. Procédé de fabrication d'un dispositif de commande électrostatique, comprenant les étapes suivantes:
fourniture d'un support stationnaire (11) et montage d'un support mobile déformé (13) ayant deux extrémités sur ledit support stationnaire (11), et positionnement dudit support mobile (13) de manière à entrer en contact avec une portion dudit support stationnaire (11), ledit support mobile déformé (13) étant comprimé en ayant une longueur plus grande que la distance entre ses supports de montage afin de créer ladite déformation, lesdits supports étant non conducteurs;
montage d'au moins des première (15), deuxième (17) et troisième (19) électrodes séparées sur lesdits supports, ladite première électrode (15) étant montée sur ledit support mobile déformé (13) et ladite deuxième électrode (17) étant montée sur ledit support stationnaire (11), ladite troisième électrode (19) étant montée sélectivement sur l'un desdits supports, lesdites électrodes étant positionnées de manière à former une première et une deuxième paires d'électrodes opposées destinées à créer une attraction électrostatique entre chaque électrode opposée;
isolation desdites électrodes de manière à empêcher un contact électriquement conducteur entre lesdites électrodes; et
connexion électrique d'un moyen de fourniture de tension (23) auxdites électrodes servant à amener une tension destinée à créer sélectivement une attraction électrostatique entre lesdites paires d'électrodes opposées et à déplacer ledit support déformé de manière à amener une paire d'électrodes en contact électrostatique; ladite électrode déformée présentant une configuration lui permettant de transmettre une force de rappel à la portion de celle-ci se trouvant en contact avec le support stationnaire (11) lors de l'application d'une tension à l'autre paire d'électrodes.

26. Procédé selon la revendication 25, dans lequel ledit moyen de fourniture de tension (23) est apte à fournir une force d'entraînement biphasée comprenant une première tension (25) à ladite première paire d'électrodes pendant une première période de temps dans un cycle de fonctionnement, et une deuxième tension (27) à ladite deuxième paire d'électrodes pendant une deuxième période de temps durant ledit même cycle.

27. Procédé selon la revendication 25, dans lequel ledit moyen de fourniture de tension (23) est apte à offrir une période de temps intermédiaire sans aucune tension appliquée à l'une quelconque des paires d'électrodes après chaque application de tension à chaque paire d'électrodes.

28. Procédé selon la revendication 25, comprenant les étapes de montage desdites première (15) et troisième (19) électrodes sur ledit support déformé, et de montage de ladite deuxième électrode (17) sur ledit support stationnaire (11), ladite deuxième électrode (17) étant dimensionnée et positionnée de manière à former une paire d'électrodes avec chacune desdites première (15) et troisième (19) électrodes sur ledit support déformé, une attraction électrostatique entre une première desdites paires d'électrodes provoquant ainsi un mouvement de rappel dudit support déformé visant à séparer l'autre desdites paires d'électrodes.

29. Procédé selon la revendication 25, comprenant les étapes de montage de ladite première électrode (15) sur ledit support déformé et de montage desdites deuxième (17) et troisième (19) électrodes sur ledit support stationnaire (11), ladite première électrode (15) étant dimensionnée et positionnée de manière à former une paire d'électrodes avec chacune desdites deuxième (17) et troisième (19) électrodes sur ledit support stationnaire (11), une attraction électrostatique entre une première desdites paires d'électrodes provoquant ainsi un mouvement de rappel dudit support déformé visant à séparer l'autre desdites paires d'électrodes.

30. Procédé selon la revendication 25, comprenant en outre l'étape de montage d'au moins une quatrième électrode (31) sur l'un desdits supports, ledit moyen de fourniture de tension (23) étant apte à amener une tension destinée à créer sélectivement une attraction électrostatique entre des paires séparées d'électrodes opposées en vue de déplacer une seule paire d'électrodes en contact électrostatique à n'importe quel moment.

31. Procédé selon la revendication 30, comprenant l'étape de montage desdites première (15) et troisième (19) électrodes sur ledit support déformé et de montage desdites deuxième (17) et quatrième (31) électrodes sur ledit support stationnaire (11), lesdites électrodes étant dimensionnées et positionnées de manière à former une paire d'électrodes avec lesdites première (15) et deuxième (17) électrodes et lesdites troisième (19) et quatrième (31) électrodes, une attraction électrostatique entre une première desdites paires d'électrodes provoquant ainsi un mouvement de rappel dudit support déformé visant à séparer l'autre desdites paires d'électrodes.

32. Procédé selon la revendication 30, comprenant l'étape de montage de ladite première électrode (15) sur ledit support déformé et de montage desdites deuxième (17), troisième (19) et quatrième (31) électrodes sur ledit support stationnaire (11), ladite première électrode (15) étant dimensionnée et positionnée de manière à former des paires d'électrodes séparées avec lesdites deuxième (17), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

33. Procédé selon la revendication 30, comprenant l'étape de montage desdites première (15), troisième (19) et quatrième (31) électrodes sur ledit support déformé et de montage de ladite deuxième électrode (17) sur ledit support stationnaire (11), ladite deuxième électrode (17) étant dimensionnée et positionnée de manière à former des paires d'électrodes séparées avec lesdites première (15), troisième (19) et quatrième (31) électrodes, une attraction électrostatique entre une première desdites paires d'électrodes provoquant ainsi un mouvement de rappel dudit support déformé visant à séparer les autres desdites paires d'électrodes.

34. Procédé de fabrication d'une micro-vanne, comprenant les étapes suivantes:
formation d'une chambre de micro-vanne définissant au moins une ouverture de vanne (39); et
positionnement du dispositif de la revendication 1 à l'intérieur de celle-ci.

35. Procédé selon la revendication 34, comprenant les étapes consistant à pourvoir ladite chambre d'au moins trois ouvertures de vanne (43), (45) et (47), et à positionner ledit support mobile déformé (13) de manière à ce qu'il coopère sélectivement avec lesdites trois ouvertures de vanne (43), (45) et (47) afin de fonctionner comme une micro-vanne à trois voies.

36. Procédé selon la revendication 34, comprenant les étapes de fourniture d'une pluralité desdits dispositifs électrostatiques, chaque dispositif étant équipé d'une première (15), d'une deuxième (17) et d'une troisième ouvertures de vanne; et
connexion d'un moyen d'écoulement en réseau à ladite pluralité de dispositifs électrostatiques en parallèle, comprenant une première source d'entrée destinée à fournir une entrée commune à ladite première ouverture de vanne (43) dans chacun desdits dispositifs, une deuxième source d'entrée destinée à fournir une entrée commune à ladite deuxième ouverture de vanne (45) dans chacun desdits dispositifs, et une première sortie destinée à recevoir une sortie commune en provenance de ladite troisième ouverture de vanne (47) dans chacun desdits dispositifs.

37. Procédé selon la revendication 34, comprenant les étapes de fourniture d'une pluralité desdits dispositifs électrostatiques, chaque dispositif étant équipé d'une première (43), d'une deuxième (45) et d'une troisième ouvertures de vanne; et
de connexion d'un moyen d'écoulement en réseau à ladite pluralité de dispositifs électrostatiques en parallèle, comprenant une première source d'entrée destinée à fournir une entrée séparée à ladite première ouverture de vanne (43) dans chacun desdits dispositifs, une deuxième source d'entrée destinée à fournir une entrée séparée à ladite deuxième ouverture de vanne (45) dans chacun desdits dispositifs, et une première sortie destinée à recevoir une sortie séparée en provenance de ladite troisième ouverture de vanne (47) dans chacun desdits dispositifs.

38. Réseau de dispositif électrostatiques, comprenant une pluralité de dispositifs électrostatiques selon la revendication 24, chacun étant équipé d'une première (43), d'une deuxième (45) et d'une troisième ouvertures de vanne; et
un moyen d'écoulement en réseau raccordant ladite pluralité de dispositifs électrostatiques en parallèle, comprenant une première source d'entrée destinée à fournir une entrée commune à ladite première ouverture de vanne (43) dans chacun desdits dispositifs, une deuxième source d'entrée destinée à fournir une entrée commune à ladite deuxième ouverture de vanne (45) dans chacun desdits dispositifs, et une première sortie destinée à recevoir une sortie commune en provenance de ladite troisième ouverture de vanne dans chacun desdits dispositifs.

39. Réseau de dispositifs électrostatiques, comprenant une pluralité de dispositifs électrostatiques selon la revendication 24, chacun étant équipé d'une première (43), d'une deuxième (45) et d'une troisième (47) ouvertures de vanne; et
un moyen d'écoulement en réseau raccordant ladite pluralité de dispositifs électrostatiques en parallèle, comprenant une première source d'entrée destinée à fournir une entrée séparée à ladite première ouverture de vanne (43) dans chacun desdits dispositifs, une deuxième source d'entrée destinée à fournir une entrée séparée à ladite deuxième ouverture de vanne (45) dans chacun desdits dispositifs, et une première sortie destinée à recevoir une sortie séparée en provenance de ladite troisième ouverture de vanne (47) dans chacun desdits dispositifs.
